# EUROPÄISCHE PATENTANMELDUNG

(11) **EP 2 266 906 A2**
(43) Veröffentlichungstag der Anmeldung: **29.12.2010**
(21) Anmeldenummer: 10165113.1
(22) Anmeldetag: 07.06.2010
(51) Int. Cl.: B65H 29/12, B65H 29/66, B65G 15/48

(54) **Verfahren und Vorrichtung zur Festlegung des räumlichen Verlaufs eines Verbindungsstücks einer Förderbahn für flache Gegenstände, gefalzte Druckprodukte, vorzugsweise einen Schuppenstrom**

(30) Priorität: 23.06.2009 CH 9802009
(71) Anmelder: Ferag AG, 8340 Hinwil (CH)
(72) Erfinder: Portmann, Herbert, 8730, Uznach (CH)
(74) Vertreter: Rentsch & Partner

(57) **Zusammenfassung**

Es wird ein verbessertes Verfahren zum Bestimmen des räumlichen Verlaufs eines Verbindungsstücks (31), welches als Abschnitt einer Fördervorrichtung (10) flache Gegenstände, insbesondere gefalzte Druckbogen, vorzugsweise in einem Schuppenstrom von einem Einlauf (11) mit einer ersten räumlichen Orientierung (x, y, z) zu einem Auslauf (12) mit einer zweiten räumlichen Orientierung (x', y', z') befördert vorgeschlagen. Das neue Verfahren erlaubt die Reduzierung oder vollständige Vermeidung einer Relativbewegung, insbesondere einer Verdrehung, benachbarter Druckbogen gegeneinander in der Förderebene indem ein Band aus einem Material mit vorgegebenen Materialeigenschaften sowie vorgegebener Länge (l), Breite (b) und Dicke (d) vorausgesetzt wird und dieses Band mit seinen Enden jeweils an den Einlauf (11) und den Auslauf (12) angeschlossen wird, und dass der sich aufgrund der Materialeigenschaften und der Geometrie des Bandes einstellende räumliche Verlauf des Bandes als räumlicher Verlauf des Verbindungsstücks genommen wird.

## Beschreibung

Bei der Verarbeitung von Zeitungen oder vergleichbaren Druckprodukten werden die aus der Druckmaschine kommenden Druckbogen im Zuge der Weiterverarbeitung häufig in gefalzter Form als Schuppenstrom von einer Verarbeitungsstation zur nächsten transportiert oder in Speichereinrichtungen in Form eines Wickels zwischengespeichert. Da die verschiedenen Verarbeitungsstationen und Speichereinrichtungen in einer grösseren Halle verteilt angeordnet sind, muss der geförderte Schuppenstrom meist auf unterschiedlichen Ebenen und in wechselnden Richtungen transportiert werden. Beim Übergang zwischen verschiedenen Ebenen und/oder Richtungen durchläuft der Schuppenstrom Raumkurven, die sich je nach Ausgestaltung mehr oder weniger störend auf den Schuppenstrom auswirken.

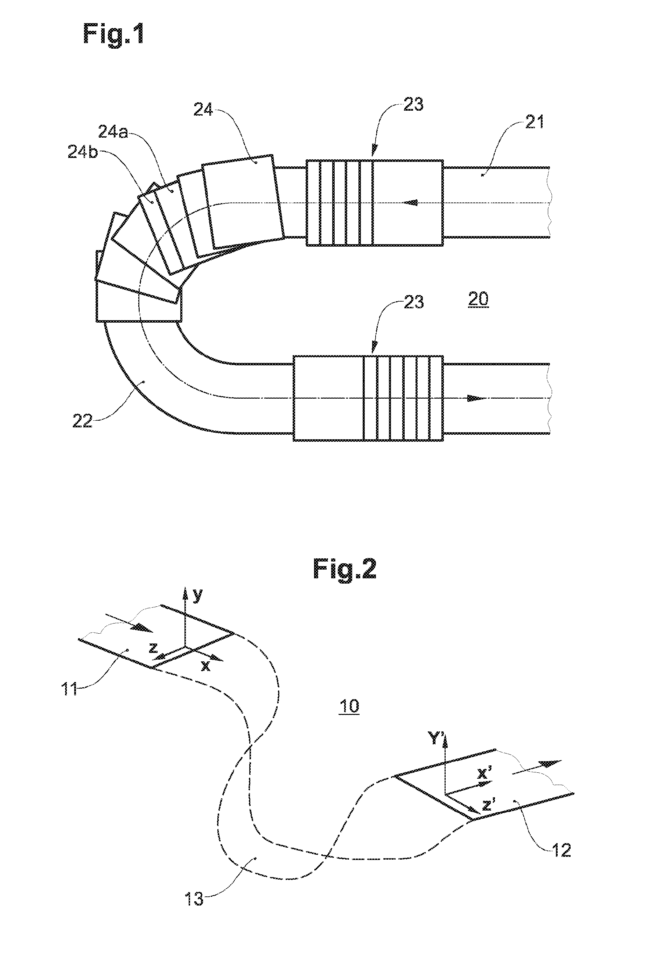

In Fig. 1 ist eine beispielhafte Konfiguration einer Fördervorrichtung 20 für einen Schuppenstrom 23 wiedergegeben, bei welcher der in Richtung der Pfeile geförderte Schuppenstrom 23 in einer Ebene eine 180°-Wende durchläuft, die ausgehend von einer ebenen, linearen Förderbahn 21 durch ein ebenes, halbkreisförmiges Kurvenstück 22 vermittelt wird (der Einfachheit halber ist in der Fig. 1 kein durchgehender Schuppenstrom gezeichnet, sondern nur kurze Abschnitte des Schuppenstroms). Innerhalb des Kurvenstücks 22 müssen sich die einzelnen Druckbogen 24 des Schuppenstroms 23 gegeneinander verdrehen, um der Kurve folgen zu können. Eine solche Verdrehung ist weitgehend unproblematisch, und aus dem Stand der Technik sind die nötigen Mittel bekannt, um den Schuppenstrom nach Durchlaufen des Kurvenstücks wieder in die gewünschte regelmässige Form zu bringen. Wenn die im Schuppenstrom übereinander liegenden Druckbogen 24 aneinander kleben oder auf andere Weise an der freien gegenseitigen Verschiebbarkeit gehindert sind oder sofern die Mittel zum Re-Formieren des Schuppenstroms nicht exakt arbeiten kommt es zu Unregelmässigkeiten im Schuppenstrom, die bei nachfolgenden Verarbeitungsschritten Probleme bis hin zu Produktionsunterbrüchen erzeugen.

Gerade aber in den Fällen, in denen der Schuppenstrom in Form von fest aufgewickelten Rollen zwischengespeichert wird, können die Druckbogen, insbesondere aufgrund der verwendeten Druckfarben, aneinander haften. Ist die Drehung der einzelnen Druckbogen gegeneinander behindert, wie dies in Fig. 1 für die Druckbogen 24a und 24b angedeutet ist, kommt es zu Störungen im Schuppenstrom 23, die zu Unregelmässigkeiten bis hin zu einem Unterbruch der Förderung führen und damit Produktionsausfälle und zeitaufwändige Wiederaufnahmeprozeduren verursachen können. Aus diesem Grunde ist bereits früher vorgeschlagen worden (WO-A1-94/02398), nach der Ausspeicherung von Schuppenströmen aus Speicherwickeleinheiten auf Kurven generell zu verzichten und die Schuppenströme auf geraden Auslagerungsstrecken bis zur nächsten Verarbeitungsstation zu führen.

Bei der Nachrüstung bestehender Anlagen oder der Erstellung oder Integration von neuen Druckweiterverarbeitungsanlagen in bestehende Produktionshallen herrschen jedoch oft besonders beengte Platzverhältnisse, so dass die Stellung einzelner Anlagenteile zueinander nicht frei gewählt werden kann, sondern vorgegeben ist. Die entsprechenden Transportwege zwischen den einzelnen Anlageteilen müssen auf diese Vorgaben angepasst werden und lassen sich nur in den seltensten Fällen frei wählen. Ein Verzicht auf Kurven im Transportweg der Schuppenströme steht im Konflikt mit diesen Vorgaben.

Aus dem Stand der Technik sind verschiedene Vorrichtungen zum Umlenken von Produktströmen bekannt, die üblicherweise einfachen Geometrien folgen. So werden zum Beispiel im Bogenförderer aus der US 4078489 Druckbögen in einem Bogen-Wendeapparat um 180° gewendet und gleichzeitig ihre Transportrichtung um 90°umgelenkt. Im halbzylindrischen Wendeapparat folgen die Bögen im Wesentlichen der Mantelfläche eines Kreiszylinders und werden entsprechend dem Durchmesser dieses Zylinders von einer ersten Förderebene auf eine zweite Förderebene angehoben. Die Position der Be- oder Verarbeitungsstationen insbesondere die Winkelstellung zueinander ist durch den Bogenförderer vorbestimmt.

Aus der EP-A1-242865 ist eine Vorrichtung zum Verändern der Förderrichtung von schuppenförmig aufeinanderliegenden, mindestens zweilagigen Papierprodukten beschrieben die es erlaubt die Formation der Papierprodukte, das heisst den Schuppenstrom, unverändert in eine andere Richtung umzulenken und dabei gegebenenfalls die einzelnen Papierprodukte zu wenden. Die Papierprodukte sind dabei in einer Zwangsführung formationsfest eingespannt und werden schraubenförmig mindestens teilweise gewendet und winklig zur Zuführrichtung geführt. Die Zwangsführung umfasst gemäss Ausführungsbeispielen ein die Papierprodukte von oben oder unten angreifendes Förderband, das wiederum auf einer schraubengangförmigen Zwangsführung läuft. Die Zwangsführung wird von einer Vielzahl von Rollen gebildet, die auf einem stationär befestigten kreiszylindrischen Rollenträger angeordnet sind. Durch die Einspannung in der Zwangsführung werden die Papierprodukte bei der Führung um die Wendeachse so festgehalten, dass die Formationsfestigkeit gewährleistet ist. Auch die Vorrichtung gemäss der EP-A1-242865 definiert also eindeutig eine einzige Wendeachse, die die Position der zu verbindenden Arbeitsstationen zueinander bestimmt. Der Winkel der schraubenförmigen Zwangsführung zwischen dem Zu- und Abförderer muss doppelt so gross sein, wie der Winkel zwischen der Wendeachse und dem Zuführer.

Aus den beiden Schriften wird das allgemeine Konstruktionsprinzip deutlich, dem die bekannten gattungsgleichen Vorrichtungen gemäss dem Stand der Technik folgen. Die Transportbahn der Druckprodukte oder des Schuppenstroms wird entlang eines real ausgebildeten oder eines Imaginären Zylinders um eine Wendeachse umgelenkt wobei die Transportbahn selbst eine Schraubenform innerhalb der Mantelfläche eines gedachten Zylinders annimmt. Eine Vielzahl von Führungsrollen ist jeweils entlang dieser Spiralkurve angeordnet und führt die Produkte direkt oder ein Transportband auf dem die Produkte abgelegt sind. Sowohl der Verzicht auf gekrümmte Förderabschnitte wie auch die Verwendung der bekannten, oben beschriebenen "Spiralförderer" zwischen unterschiedlich orientierten geraden Förderabschnitten schränkt die Möglichkeiten der Konfiguration von Transportsystemen für Schuppenströme in der Druckweiterverarbeitung erheblich ein und verhindert oft platzsparende und individuell angepasste Lösungen. In der Praxis gestaltet sich die Anpassung der letztgenannten "Spiralförderer", welche von vornherein eine bestimmte, durch die Wendeachse und den Zylinderdurchmesser vorgegebene Raumkurvenform haben, bei der Konstruktion und dann nochmals vor der Inbetriebnahme einer Anlage als äusserst arbeitsintensiv. In aufwändigen Versuchsreihen und im kostenintensiven Testbetrieb müssen sie für jede neue Anlage iterativ für den Produktionsbetrieb angepasst werden.

Somit besteht der Wunsch, schnell und flexibel den Verlauf raumkurvenartiger Verbindungsstücke bestimmen zu können, um weitgehend beliebig orientierte gerade Förderabschnitte von Fördervorrichtungen, insbesondere für Schuppenströme, miteinander verbinden zu können.

Es ist daher Aufgabe der Erfindung, ein Verfahren anzugeben, mit dem schnell und einfach die Raumgeometrie, das heisst der räumliche Verlauf eines Verbindungsstücks, respektive eines Förderabschnitts zwischen zwei unterschiedlich orientierten geraden oder gebogenen Förderabschnitten von Fördervorrichtungen für Druckprodukte, die vereinzelt oder insbesondere in einem Schuppenstrom angeordnet sind, bestimmt werden kann, derart, dass die auf diesem Verbindungsstück geförderten Druckprodukte, insbesondere der geförderte Schuppenstrom, der wiederum durch Abstand und Dicke der zu fördernden Produkte bestimmt ist, das Verbindungsstück störungsfrei durchlaufen kann. Es ist eine weitere Aufgabe der Erfindung eine Vorrichtung zur Verfügung zu stellen, die die Nachteile und Einschränkungen der bekannten Vorrichtungen vermeidet.

Die Aufgabe wird durch ein Verfahren gemäss Gesamtheit der Merkmale des Anspruchs 1 und durch eine Vorrichtung gemäss Gesamtheit der Merkmale des Anspruchs 11 gelöst.

Grundprinzipien und bevorzugte Ausführungsformen der Erfindung werden nachfolgend mit Bezugnahme auf die beiliegenden Zeichnungen erläutert.

Es zeigen:
- Figur 1: eine Draufsicht auf eine Fördereinrichtung mittels derer ein Schuppenstrom in der Ebene um eine 180° Kurve gefördert wird;
- Figur 2: einen räumlichen Verlauf eines Verbindungsstücks gemäss einer Ausführungs- form der Erfindung welches als Abschnitt einer Fördervorrichtung zum Beispiel gefalzte Druckbogen im Schuppenstrom von einem Einlauf mit einer ersten räumlichen Orientierung x, y, z zu einem Auslauf mit einer zweiten räumlichen Orientierung x', y', z' fördert, wobei die Druckprodukte nicht und die Förderrich- tung als Pfeile eingezeichnet sind;
- Figur 3: ein Band gemäss einer Ausführungsform der Erfindung mit konstanter Dicke;
- Figur 4a: ein Band gemäss einer weiteren Ausführungsform der Erfindung mit reduzierter Dicke in einem zentralen Bereich;
- Figur 4b: ein Band gemäss einer weiteren Ausführungsform der Erfindung mit reduzierter Breite in einem zentralen Bereich;
- Figur 5: eine perspektivische Draufsicht auf eine lineare Abwicklung eines Verbindungs- stücks gemäss einer Ausführungsform der Erfindung;
- Figur 6: eine Seitenansicht auf eine lineare Abwicklung eines Verbindungsstücks gemäss einer weiteren Ausführungsform der Erfindung;
- Figur 7: einen räumlichen Verlauf eines weiteren Verbindungsstücks gemäss einer Aus- führungsform der Erfindung welches Einlauf und Auslauf mit einer alternativen Raumkurve im Vergleich zu Figur 2 verbindet;
- Figur 8: einen räumlichen Verlauf eines weiteren Verbindungsstücks gemäss einer Aus- führungsform der Erfindung welches stumpfwinklig zueinander ausgerichteten Einlauf und Auslauf verbindet, wobei die Produkte gewendet werden;
- Figur 9: einen räumlichen Verlauf eines weiteren Verbindungsstücks gemäss einer Aus- führungsform der Erfindung welches spitzwinklig zueinander ausgerichteten Ein- lauf und Auslauf verbindet, wobei die Produkte gewendet werden; und
- Figur 10: einen Querschnitt durch ein Verbindungsstück gemäss einer Ausführungsform der vorliegenden Erfindung.

Beim erfindungsgemässen Verfahren zum Bestimmen des räumlichen Verlaufs eines Verbindungsstücks, welches als Abschnitt einer Fördervorrichtung flache Gegenstände, insbesondere gefalzte Druckbogen, vorzugsweise in einem Schuppenstrom von einem Einlauf mit einer ersten räumlichen Orientierung zu einem Auslauf mit einer zweiten räumlichen Orientierung befördert, wird zur Reduzierung oder vollständigen Vermeidung einer Relativbewegung, insbesondere einer Verdrehung und/oder Verschiebung, benachbarter Druckbogen gegeneinander in der Förderebene ein Band aus einem Material mit vorgegebenen Materialeigenschaften sowie vorgegebener Länge (I), Breite (b) und Dicke (d) vorausgesetzt wird, dass dieses Band mit seinen Enden jeweils richtungsgleich an den Einlauf und den Auslauf angeschlossen wird, und dass der sich aufgrund der Materialeigenschaften und der Geometrie des Bandes einstellende räumliche Verlauf des Bandes als räumlicher Verlauf des Verbindungsstücks, vorzugsweise eines Transportbands und besonders bevorzugt eines angetriebenen Transportbands des Verbindungsstücks genommen wird.

Zum Bestimmen des Verlaufs des Verbindungsstücks wird das Band an Einlauf und Auslauf angeschlossen und beobachtet welche Ausrichtung im Raum die entstehende Schleife - im Folgenden auch Looping genannt - annimmt. Es kann davon ausgegangen werden, dass die aus dem erfindungsgemässen Verfahren resultierende Geometrie des Loopings auf einer Minimierung der Deformationsenergie beruht. Das Band minimiert die mechanische Spannung, wobei sich der Spannungsverlauf bei der Momentenbeanspruchung der Biegung über die gesamte Länge des Bandes und über den Querschnitt an allen Punkten minimiert.

Die derartige Optimierung der Raumgeometrie verhindert, bezogen auf einen Schuppenstrom unerwünschte Relativbewegungen zwischen den transportierten Produkten. Die Relativbewegung kann dabei eine Verdrehung aber auch eine translatorische Verschiebung entlang der Längs- und/oder der Querachse der Produkte oder eine überlagerte Bewegung aus beiden Vorgenannten sein.

Die Vorrichtungen, die gemäss dem neuen Verfahren konstruiert sind ermöglichen die Verbindung von beliebig zueinander ausgerichteten linearen Transportabschnitten und erlauben einen störungsfreien Betrieb auch bei hohen Fördergeschwindigkeiten wie sie im Hochleistungsbereich erforderlich sind.

Die optimierte Verlaufsrichtung im Raum, die das Band nach dem Einspannen zwischen Einlauf und Auslauf einnimmt muss nicht zwingend die für die Herstellung der Fördervorrichtung sein. Die zu fördernden Druckprodukte werden beim oben beschriebenen Wenden, respektive beim Fördern aus der ebenen Fläche heraus üblicherweise mittels weiterer Bänder, Riemen oder Rollen eingespannt um eine schwerkraftbedingte Relativbewegung zu verhindern. Beim Einsatz von solchen Einspannbändern oder -Riemen ist es vorteilhaft, diese an der Aussenseite des Looping angreifen zu lassen und gleichzeitig eine kontinuierliche konvexe Krümmung, das heisst durch Ausbildung einer Schleife ohne Drehrichtungsänderungen, vorzusehen. Die Einspannbändern oder -Riemen lassen sich dadurch sehr einfach spannen und es kann auf zusätzliche Stütz-, Führungs- oder Spanneinrichtungen ganz oder weitgehend verzichtet werden oder deren Anzahl und Dimensionierung kann zumindest stark reduziert werden. Durch das erfindungsgemässe Verfahren sind in der gemäss dem Verfahren hergestellten Transportvorrichtung nicht nur die unerwünschten Relativbewegungen zwischen den Produkten minimiert oder vollständig vermieden, sondern auch unerwünschte Relativbewegungen zwischen den Produkten und den zusätzliche Stütz-, Führungs- oder Spanneinrichtungen sind minimiert oder ganz vermieden. In der Praxis bringt dies beim Auf stellen und Einrichten der Anlagen eine äusserst wertvolle Zeitersparnis mit sich und zudem wird eine ungleichmässige Abnutzung dieser Strukturen vermieden, was die Standzeiten und die Intervalle zwischen Wartungsarbeiten erhöht.

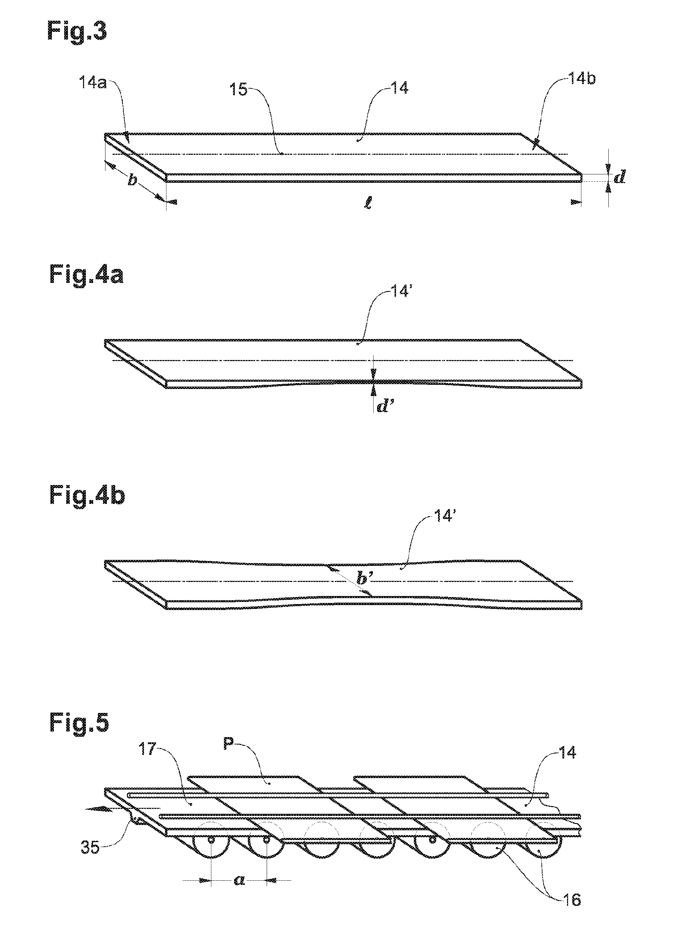

Gemäss einer ersten bevorzugten Ausführungsform der vorliegenden Erfindung wird das herzustellende Verbindungsstück mit Hilfe eines realen Blechbands konstruiert. Es werden dabei, vorzugsweise im originalen Massstab, Ein- und Auslauf anhand der Vorgabe von den zu verbindenden Bearbeitungsstationen und/oder Fördereinrichtungen positionsfest aufgebaut und zwischen beiden wird ein Blechband, knickfrei eingespannt. Ist das Blechband mit einem Anfang an den Einlauf und mit einem Ende an den Auslauf angeschlossen und wirken - abgesehen von der Schwerkraft, die im Normalfall vernachlässigt werden soll - keine äusseren Kräfte mehr auf das Band ein, so richtet es sich wie vorgängig beschrieben im Raum in einer Weise aus, dass die Spannungen innerhalb des Bandes minimiert sind. Als Band wird in bevorzugten Ausführungsformen wie in der Figur 3 dargestellt ein Blechband 14, besonders bevorzugt aus einem Federstahl, verwendet. Bänder aus anderen biegbaren Materialien mit elastischem Materialverhalten lassen sich ebenfalls einsetzen.

Sobald sich das Band in der vorteilhaften Raumkurve ausgerichtet hat, wird es ausgemessen. Dazu kann es mechanisch mit einem dreidimensionalen Messfühler abgetastet werden oder es wird vorzugsweise mit geeigneten Mitteln, zum Beispiel mit einem feinen Punktmuster, markiert und anschliessend wird ein Laserprofil optisch abgetastet. Der derartig erzeugte Datensatz wird in ein CAD Programm eingelesen und bildet die Grundlage für die Konstruktion der zur Herstellung der Vorrichtung erforderlichen Bauteile wie Rollen, Rollenhalter, Stützbleche und dergleichen.

Wie in der Figur 3 dargestellt weist das Blechband 14 in vorteilhaften einfachen Varianten eine konstante Dicke d auf.

Wie oben bereits ausgeführt hat es sich als vorteilhaft erwiesen, wenn im Verlauf des Loopings, aber insbesondere unmittelbar nach dem Einlauf und vor dem Auslauf keine wesentlichen Richtungsänderungen erfolgen. Der Anschluss des Blechbands erfolgt stirnseitig an Einlauf und Auslauf und im Wesentlichen richtungsgleich oder tangential in Bezug auf die räumlichen Orientierung x, y, z derselben. Im Folgenden soll von einem tangentialen Anschluss gesprochen werden, da Einlauf und Auslauf zwar vorzugsweise jeweils in ebenen Flächen liegen, aber auch in Förderrichtung symmetrisch gebogen sein können.

Eine einfache Lösung um den tangentialen Anschluss zu erreichen liegt gemäss der vorliegenden Erfindung darin, dass das verwendete Blechband 14', wie in der Figur 4a dargestellt über die Länge I eine veränderliche Dicke d', insbesondere einen zentralen Abschnitt mit reduzierter Dicke d', aufweist. Diese einfache Massnahme der Reduktion der Dicke d' im zentralen Bereich erhöht hier den Grad der Biegsamkeit und führt dazu, dass die beiden Endbereiche 14a, 14b des zwischen Ein- und Auslauf eingespannten Blechs 14' im Verhältnis zum dünneren Zentralbereich weniger stark ausgelenkt werden und trägt dazu bei, dass sich der oben genannte vorteilhafte Verlauf im Bereich des Ein- und des Auslaufs von selbst einstellt.

Dieser Effekt lässt sich auch durch die Verwendung von einem Band 14" mit einer reduzierten Breite b' insbesondere in einen zentralen Abschnitt erreichen, wie es in der Figur 4b angedeutet ist. Soll der Effekt noch verstärkt werden, so lassen sich auch Bänder einsetzten, die durch eine gleichzeitige Reduktion von Breite und Dicke modifiziert sind.

Während im oben beschriebenen Verfahren ein reales Band 14 mit vorgegebenen Eigenschaften zum Einsatz kommt und der sich einstellende Verlauf messtechnisch abgenommen und zur Auslegung des Verbindungsstücks verwendet wird, hat es sich als äusserst effizient erwiesen, den räumlichen Verlauf des Bandes ausschliesslich rechnerisch zu ermitteln und diese Daten zur Auslegung des Verbindungsstücks zu verwenden.

Es hat sich gezeigt, dass sich die Entwicklungszeit für Verbindungsstücke, die in der Regel individuell konstruiert werden müssen, durch den Einsatz eines virtuellen Bands nochmals entscheidend verkürzen und die Raumgeometrie nochmals verbessern lässt.

Die rechnerische Ermittlung des Verlaufs erfolgt gemäss bevorzugter Ausführungsvarianten nach der Methode der Finiten Elemente (FEM).

Die benötigten Parameter zur FEM-Berechnung der Looping-Raumgeometrie können zu Beginn der Konstruktion einfach in entsprechende Fenster eines geeigneten Berechnungsprogramms wie zum Beispiel MATLAB (MATrix LABoratory) der Firma The MathWorks, Inc. eingegeben werden um die Verformung zu berechnen. Nach Abschluss der Berechnung der Raumgeometrie lassen sich durch die Übergabe dieser Daten an ein bevorzugtes CAD-Programm, zum Beispiel CATIA (Computer Aided Three-Dimensional Interactive Application, ein CAD-Programm der französischen Firma Dassault Systemes) schnell und effizient die für die Vorrichtung benötigten Baugruppen wie Tragrollen, Rollenträger, seitliche Abstützbleche und weitere Elemente eines Tragrahmens berechnen und die für die Produktion nötigen Datensätze generieren.

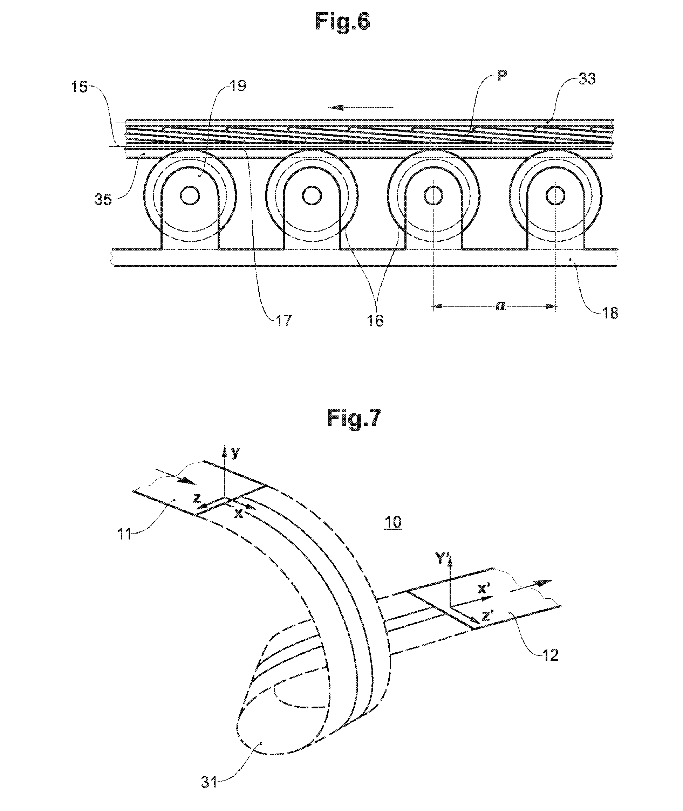

In der Figur 6 ist in einer Seitenansicht stark schematisiert ein vereinfachtes Verbindungsstück in linearer Abwicklung dargestellt, das mit Hilfe des erfindungsgemässen Verfahrens konstruiert werden kann. Auf einer Tragschiene 18 ist eine Mehrzahl von Rollenträgern 19 angeordnet, die jeweils eine Tragrolle 16 tragen. Die Tragrollen 16 selbst tragen das Transportband 17, auf dem die zu fördernden Produkte, zum Beispiel Druckprodukte P im Schuppenstrom liegen. Um die Produkte P bei der Förderung in gekrümmten Abschnitten in Verhältnis zum Transportband und zueinander zu fixieren ist zusätzlich ein Anpressband 33 vorgesehen, das die Produkte in der Figur nach unten gegen das Transportband drückt.

Tatsächlich ist die erfindungsgemässe Vorrichtung nicht linear in der Ebene ausgerichtet, wie dies der Einfachheit halber in der Figur skizziert ist, sondern sie verläuft gekrümmt im Raum. Die optimale Geometrie der Raumkrümmung, respektive die Auslegung der gesamten Tragkonstruktion 16, 18, 19 wird nun nicht direkt ermittelt, sondern es wird gemäss der Erfindung ein indirekter Ansatz gewählt. Wie oben bereits beschrieben, wird das Krümmungsverhalten eines Bands, vorzugsweise eines Blechbands beobachtet wird und ausgehend von der selbsttätig eingenommenen optimalen Raumkurve werden die nötigen Daten für die Herstellung der Vorrichtung gemessen oder berechnet. Die Krümmung des Blechbands gibt dabei vorzugsweise die Raumgeometrie des Transportbands 17 vor.

Basis der FEM-Berechnung ist ein also ein flaches Blech, wie es schematisch zum Beispiel in der Figur 3 dargestellt ist. Das Blech hat dabei gemäss der vorliegenden Ausführungsform der Erfindung nicht nur eine Länge I und eine Breite b, sondern auch eine Dicke d. Soll ein Verbindungsstück hergestellt werden, so müssen die Einlauf- und Auslauf-Koordinaten eingegeben werden. In bevorzugten Ausführungsformen wird noch die Genauigkeit der Berechnung über die Segmentierung, das heisst über die Anzahl der Zwischenpunkte, festgelegt. Zudem lässt sich in einer weiteren bevorzugten Ausführungsform der Abstand a zwischen den Rollenachsen, respektive die Anzahl der gewünschten Rollen vorgeben.

In einem ersten Berechnungsschritt wird das virtuelle Blech nach oben oder unten verbogen. Dies erfolgt über das Anbringen eines Moments, wobei es für den Fachmann ohne erfinderisches Dazutun möglich ist ein geeignetes Abbruchkriterium zu wählen. Bezogen auf die Darstellung der Figuren 2, 7, 8 und 9 entspricht das Verbiegen des Blechs nach unten einer Auslenkung in Richtung y/y'.

In einem nächsten Schritt wird die vertikale Verdrehung von der Ausgangsstellung z hin zur Endstellung z' vorgenommen, wobei wiederum ein geeignetes Abbruchkriterium bei diesem und dem nachfolgend beschriebenen Schritt gewählt wird.

In einem dritten Schritt erfolgt die Torsion des Endes 14b des Blechstreifens gegenüber seinem Anfangsbereich 14a um die neutrale Faser 15 respektive um die Raumachse x'. Aus den derart berechneten Daten zur Bandgeometrie wird ein virtuelles Laserprofil erstellt, das zum Beispiel in der oben beschriebenen Weise zur Konstruktion der benötigten Bauelemente weiter verwendet werden kann.

In den Figuren 2 und 7 sind - stark schematisch - zwei unterschiedliche räumliche Verläufe je eines Verbindungsstücks 13, 31, welches als Abschnitt einer Fördervorrichtung 10 zum Beispiel gefalzte Druckbogen im Schuppenstrom vom Einlauf 11 mit einer ersten räumlichen Orientierung x, y, z zum Auslauf 12 mit einer zweiten räumlichen Orientierung x', y', z' bringt. Beide Verläufe stellen sicher, dass die Integrität des zu fördernden Schuppenstroms gewahrt bleibt und es nicht zu unerwünschten Relativbewegungen der Produkte untereinander kommt. Bei beiden Ausführungsvarianten soll zudem die Bandlänge gleich sein, so dass kein Unterschied hinsichtlich des Transportwegs besteht. Worin sich die beiden Varianten aber stark unterscheiden ist die Drehrichtung der Raumkurve, respektive das Fehlen einer Drehrichtungsänderung in der Looping-Konstruktion gemäss der Figur 7. Diese Form erlaubt es den nicht in der Figur dargestellten Schuppenstrom beim Fördern auf der Aussenseite der Schleife mittels weiterer ebenfalls nicht eingezeichneter Bänder oder Riemen eingespannt zu fixieren und damit eine schwerkraft- und/ oder fliehkraftbedingte Relativbewegung zu verhindern. Diese Anpressbänder oder -Riemen können kurz nach dem Einlauf 11 an das Transportband des Loopings 31 tangential herangeführt werden und verbleiben im gespannten Zustand auf Grund der Geometrie der Wendeschleife ohne weitere Hilfsmittel am Schuppenstrom bis hin zum Auslauf. Hier ist die zusätzliche Fixierung des Schuppenstroms nicht mehr nötig, da die Druckprodukte wieder auf der Oberseite des Transportbandes liegen und der Schuppenstrom schon allein durch die Schwerkraft stabilisiert ist. Die vorzugsweise endlosen Einspannbänder oder -Riemen können nach erreichen dieser Produktposition von den Produkten weg umgelenkt und zum Einlaufbereich zurückgeführt werden.

Für eine Ausgestaltung gemäss der Figur 2 können hingegen räumliche Gegebenheiten sprechen, die zum Beispiel eine Konstruktion gemäss der Figur 7 nicht zulassen. Es kommt regelmässig vor, dass der optimale Transportweg durch vorbestehende Konstruktionen wie zum Beispiel tragende Teile der Produktionshalle, nicht verschiebbare Bearbeitungs- oder Fördereinrichtungen oder durch wichtige Versorgungsleitungen verunmöglicht wird. Solche Voraussetzungen können zu einer Geometrie führen, wie sie strichliniert in der Figur 1 eingezeichnet ist. Das Verbindungsstück 13 könnte um einen vorbestehenden, nicht in der Figur dargestellten Greiferförderer herumgeführt sein. Der erfindungsgemässe Blechstreifen darf sich nun nicht irgendeinen optimalen Verlauf im Raum suchen, sondern er muss dem Hindernis ausweichen. Bei solchen komplexen Verläufen hat es sich als vorteilhaft erwiesen die zu erstellende Raumkurve entweder zu unterteilen und Zwischenflächen vorzugeben, die einen Hilfsein- und Auslauf definieren oder eine äussere Kraft am Blechstreifen angreifen zu lassen, die ihn auf eine entsprechende Ausweichbahn zwingt.

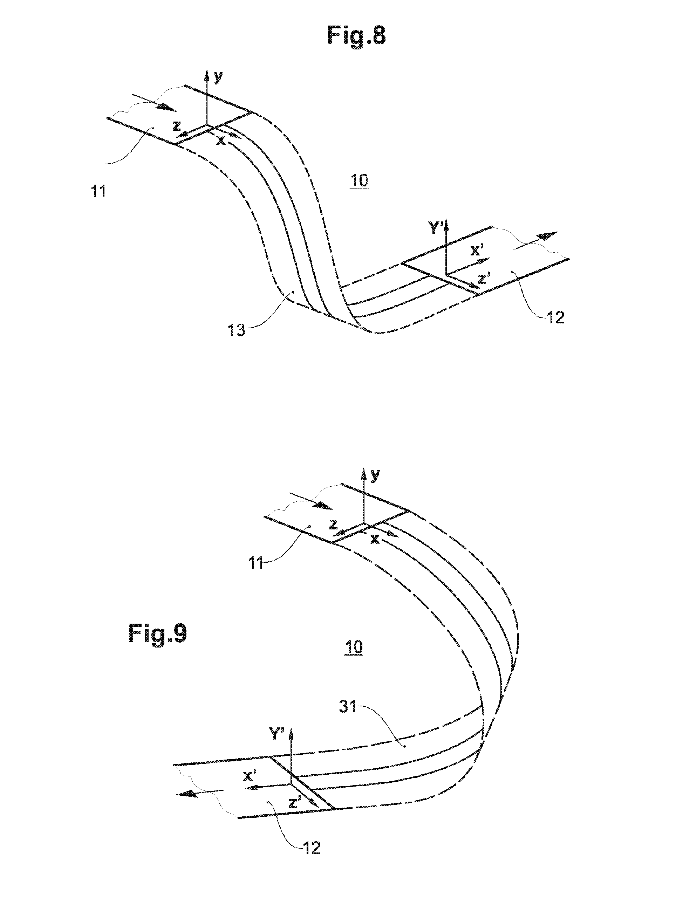

In den Figuren 8 und 9 sind zwei Ausführungsformen von erfindungsgemässen Verbindungsstücken skizziert, bei denen Einlauf 11 und die Ausläufe 12' und 12" derart miteinander verbunden sind, dass die geförderten Druckprodukte im Verlauf der Verbindungsstücke um 180° gewendet werden. Liegt zum Beispiel im Bereich des Einlaufs die Schlagzeile eines gefalzten Hauptproduktes oben, so bewirken die dargestellten Ausführungsformen, dass diese im Schuppenstrom, wenn er das Verbindungsstück im Bereich des Auslaufs verlässt, unten liegt.

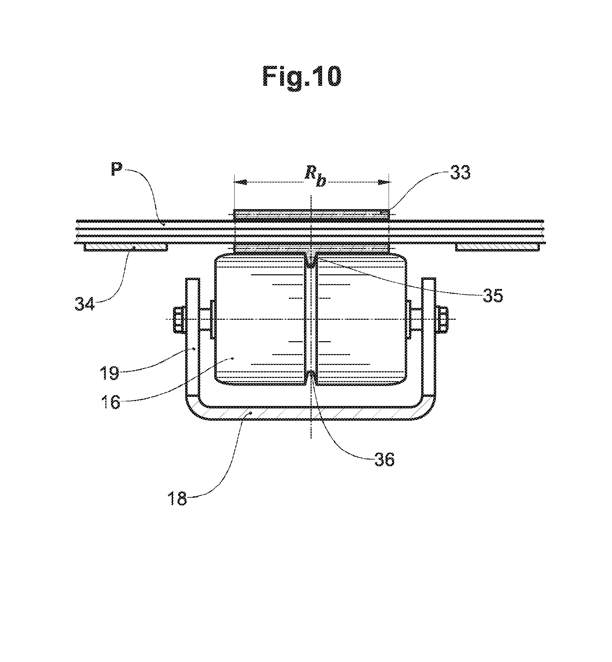

Aus den Figuren 5 und 10 ist ersichtlich, dass - wie in den Figuren 7, 8 und 9 angedeutet - Die Breite R_{b} des Transportbands vorzugsweise immer schmaler ist als die Breite der zu transportierenden Produkte. Die im Schuppenstrom übereinander liegenden Produkte P sind in der Querschnittsdarstellung gemäss der Figur 10 zwischen einem Transportband mit einem unterseitigen Führungssteg 35 und einem Anpressband 33 klemmend gehalten. Die Produkte P überragen das Transportband an beiden Seiten deutlich, so dass es sich insbesondere zum Transport von Produkten mit geringer Steifigkeit oder beim Transport von vereinzelten Produkten als vorteilhaft erwiesen hat Stützbleche 34 in den peripheren Seitenbereichen anzuordnen. Die Stützbleche sind im Wesentlichen co-planar zum Transportband und beabstandet von diesem angeordnet. Sie verhindern ein im dargestellten Beispiel schwerkraftbedingtes Herabhängen der seitlichen Produktränder, das zu Störungen führen könnte. Stützbleche können in Bereichen, in denen die Produktränder durch angreifende Fliehkräfte nach oben gebogen werden, alternativ oder zusätzlich auch oberhalb des Produktstroms angeordnet werden.

Das Transportband gemäss der Figur 10 ist mit einem unterseitigen Führungssteg 35 versehen, der in eine korrespondierende Führungsnut 36 der Tragrolle 16' eingreift. Führungssteg 35 und Führungsnut 36 halten das angetriebene Transportband in der idealen Position an der Rolle und verhindern ein seitliches Verrutschen. Aus dem dargestellten Querschnitt geht nicht hervor, dass das Transportband und der passiv mitlaufende Anpressriemen 33 in einer komplexen Raumgeometrie verlaufen. Der Anpressriemen 33 verläuft dabei an der Aussenseite einer konvexen Krümmung, so dass er zwingend länger sein muss als das weiter innen verlaufende Transportband. Der gespannte Anpressriemen ist gemäss der vorliegenden Erfindung im Bereich des über die zwischenliegenden Produkte vermittelten Zusammenwirkens mit dem Tragband vorzugsweise ohne zusätzliche Führungseinrichtungen allein vom optimierten räumlichen Verlauf in Position gehalten. Wie in der Figur 7 angedeutet kann der Anpressriemen dabei komplexen Raumkurven mit hohen Geschwindigkeiten folgen ohne dass ein Verrutschen zu befürchten wäre, da er sich selber in der optimalen spannungsärmsten Position genau über dem Transportband stabilisiert und hält.

In der Figur 5 ist schematisch dargestellt, dass die zu transportierenden Druckprodukte P anstelle eines Anpressriemens auch von Rundriemen gegen das Transportband 17 gedrückt werden können. Der Abstand der Rollen 16 zueinander kann gemäss dem erfindungsgemässen Verfahren variiert und bereits bei der Berechnung vorgegeben werden. Die Verringerung der Rollenanzahl senkt die Produktionskosten, führt aber zu einer zunehmenden Abweichung von der optimalen Geometrie des Verbindungsstücks. Wird die Anzahl der Rollen zu stark reduziert, so kommt es zu Umlenkungen mit kleinen Radien, die nicht erwünscht sind. Bei den erfindungsgemässen Vorrichtungen wird die Rollenanzahl und in Verbindung damit der Rollendurchmesser dahingehend optimiert, dass die im Verfahren ermittelte Geometrie unter Berücksichtigung der Herstellungskosten möglichst genau nachgebildet wird. Bei Ausführungsbeispielen mit einem Rollendurchmesser von 30 bis 40 mm wird der Abstand zwischen den einzelnen Rollen mindestens einen Rollendurchmesser betragen, vorzugsweise aber auf 100 bis 150 mm, besonders bevorzugt 100 bis 120 mm festgelegt.

Es ist ein wesentlicher Aspekt der vorliegenden Erfindung, dass die Geometrie der erfindungsgemässen Verbindungsstücke derart frei optimiert werden kann, dass die Achsen der einzelnen Rollen nicht mehr co-axial zu einer Wendeachse in der Mantelfläche eines Zylinders liegen oder parallel dazu angeordnet sein müssen.

Gemäss bevorzugter, nicht in den Figuren dargestellter Ausführungsformen ist auch das Transportband frei von Führungsmitteln ausgebildet. Der erfindungsgemäss optimierte Verlauf ermöglicht es auf zusätzliche Strukturen zur seitlichen Führung der Transportbänder zu verzichten, da ein solches glattes Transportband auch beim Durchlaufen von komplexen Raumkurven nicht mehr seitlich von den Tragrollen läuft. Entsprechend kann auch bei den Rollen auf die Führungsnuten verzichtet werden, was zu einer Kostenersparnis bei der Herstellung von Transportbändern und Rollen führt.

Die Vorrichtungen gemäss der vorliegenden Erfindung umfassen Ausführungsformen bei denen zur Erhöhung der Kraftübertragung Transportrollen und Transportband verzahnt sind. Zusätzlich zur Verzahnung können vorgängig beschriebene Führungsstrukturen an Band und Rollen vorgesehen sein.

Die Führung glatter Bänder lässt sich gemäss weiterer Ausführungsformen durch den Einsatz balliger Führungsrollen verbessern.

### Bezugszeichenliste

- 10, 20: Fördervorrichtung
- 11: Einlauf
- 12, 12', 12": Auslauf
- 13, 13': Verbindungsstück
- 14, 14', 14": Blechband
- 14a,14b: Bandende
- 15: neutrale Faser
- 16, 16': Tragrolle
- 17: Transportband
- 18: Tragschiene
- 19: Rollenträger
- 21: Förderbahn
- 22: Kurvenstück
- 23: Schuppenstrom
- 24, 24a, 24b: Druckbogen (z.B. gefalzt)
- 31, 31': Verbindungsstück
- 33: Anpressband, Anpressriemen
- 34: Stützblech
- 35: Führungssteg
- 36: Führungsnut
- a: Abstand
- b: Breite
- l: Länge
- d: Dicke
- b': reduzierte Breite
- d': reduzierte Dicke
- x, x': erste Raumrichtung
- y, y': zweite Raumrichtung
- z, z': dritte Raumrichtung
- P: Druckprodukte
- R_{b}: Breite des Transportbands

## Patentansprüche

1. Verfahren zum Bestimmen des räumlichen Verlaufs eines Verbindungsstücks (13, 13', 31, 31'), welches als Abschnitt einer Fördervorrichtung (10) flache Gegenstände, insbesondere gefalzte Druckbogen (24, 24a,b, P), vorzugsweise in einem Schuppenstrom (23) von einem Einlauf (11) mit einer ersten räumlichen Orientierung (x, y, z) zu einem Auslauf (12, 12', 12") mit einer zweiten räumlichen Orientierung (x', y', z') befördert, **dadurch gekennzeichnet, dass** zur Reduzierung oder vollständigen Vermeidung einer Relativbewegung, insbesondere einer Verdrehung, benachbarter Druckbogen (24a, 24b) gegeneinander in der Förderebene ein Band (14, 14', 14") aus einem Material mit vorgegebenen Materialeigenschaften sowie vorgegebener Länge (I), Breite (b, b') und Dicke (d, d') vorausgesetzt wird, dass dieses Band (14, 14', 14") mit seinen Enden (14a, 14b) jeweils an den Einlauf (11) und den Auslauf (12, 12', 12") angeschlossen wird, und dass der sich aufgrund der Materialeigenschaften und der Geometrie des Bandes (14, 14', 14") einstellende räumliche Verlauf des Bandes (14, 14', 14") als räumlicher Verlauf des Verbindungsstücks (13, 13', 31, 31') genommen wird.

2. Verfahren nach Anspruch 1, **dadurch gekennzeichnet, dass** das Band stirnseitig tangential an Einlauf (11) und Auslauf (12, 12', 12") angeschlossen wird.

3. Verfahren nach Anspruch 1 oder 2, **dadurch gekennzeichnet, dass** als Band ein Blechband (14, 14', 14"), vorzugsweise aus einem Federstahl, vorausgesetzt wird.

4. Verfahren nach Anspruch 1 oder 2, **dadurch gekennzeichnet, dass** das Blechband (14) eine konstante Breite (b) und/oder Dicke (d) aufweist.

5. Verfahren nach Anspruch 2, **dadurch gekennzeichnet, dass** das Blechband (14) über die Länge (I) eine veränderliche Dicke (d, d'), insbesondere Abschnitte mit reduzierter Dicke (d') und/oder eine veränderliche Breite (b, b'), insbesondere Abschnitte mit reduzierter Breite (b') aufweist.

6. Verfahren nach einem der Ansprüche 1 bis 5, **dadurch gekennzeichnet, dass** ein reales Band (14) mit den vorgegebenen Eigenschaften genommen wird, und dass der sich einstellende Verlauf messtechnisch abgenommen und zur Auslegung des Verbindungsstücks verwendet wird.

7. Verfahren nach einem der Ansprüche 1 bis 5, **dadurch gekennzeichnet, dass** der räumliche Verlauf des Bandes (14) ausschliesslich rechnerisch ermittelt und zur Auslegung des Verbindungsstücks verwendet wird.

8. Verfahren nach Anspruch 6, **dadurch gekennzeichnet, dass** die rechnerische Ermittlung des Verlaufs nach der Methode der Finiten Elemente (FEM) erfolgt.

9. Verfahren nach einem der Ansprüche 1 bis 8, **dadurch gekennzeichnet, dass** der räumliche Verlauf des Bandes unterteilt wird indem Zwischenflächen vorgegeben werden, die einen Hilfseinlauf und einen Hilfsauslauf definieren.

10. Verfahren nach einem der Ansprüche 1 bis 9, **dadurch gekennzeichnet, dass** eine äussere Kraft am Band angreift, die es auf eine Ausweichbahn zwingt.

11. Fördervorrichtung (10) für flache Gegenstände, insbesondere gefalzte Druckbogen (24, 24a,b, P), vorzugsweise in einem Schuppenstrom (23) umfassend ein Verbindungsstück (13, 13', 31, 31'), welches einen Einlauf (11) mit einer ersten räumlichen Orientierung (x, y, z) mit einem Auslauf (12, 12', 12") mit einer zweiten räumlichen Orientierung (x', y', z') verbindet, **dadurch gekennzeichnet, dass** der räumliche Verlauf des Verbindungsstücks (13, 13', 31, 31') nach einem Verfahren gemäss einem der Ansprüche 1 bis 11 bestimmt ist.

12. Fördervorrichtung gemäss Anspruch 11, **dadurch gekennzeichnet, dass** der sich einstellende räumliche Verlauf des Bandes (14, 14', 14") als räumlicher Verlauf eines Transportbands (17) genommen wird.

13. Fördervorrichtung gemäss Anspruch 11 oder 12, **dadurch gekennzeichnet, dass** das Transportband (17) schmaler als die zu transportierenden Produkte (24, 24a,b, P) ausgelegt ist.

14. Fördervorrichtung gemäss einem der Ansprüche 11 bis 13, **dadurch gekennzeichnet, dass** das Transportband (17) mit Tragrollen (16, 16') zusammenwirkende Führungsmittel zum Verhindern einer seitlichen Relativbewegung aufweist.

15. Fördervorrichtung gemäss einem der Ansprüche 11 bis 14, **dadurch gekennzeichnet, dass** das Transportband mit den Tragrollen zusammenwirkende Mittel zur Verbesserung der Kraftübertragung, insbesondere eine Verzahnung, aufweist.

16. Fördervorrichtung gemäss einem der Ansprüche 11 bis 13, **dadurch gekennzeichnet, dass** das Transportband an seiner den Rollen zugewandten Seite glatt ausgebildet ist.

17. Fördervorrichtung gemäss einem der vorhergehenden Ansprüche, **dadurch gekennzeichnet, dass** ein Anpressriemen (33) zum klemmenden Halten der zu transportierenden Produkte (24, 24a,b, P) zwischen Transportband (17) und Anpressriemen (33) vorgesehen ist.

18. Fördervorrichtung gemäss Anspruch 17, **dadurch gekennzeichnet, dass** der Anpressriemen (33) frei von Führungsmitteln zum Verhindern einer seitlichen Relativbewegung ist.

19. Fördervorrichtung gemäss einem der vorhergehenden Ansprüche, **dadurch gekennzeichnet, dass** seitlich vom Transportband (17) Stützbleche (34) angeordnet sind.
